Europäisches Patentamt

European Patent Office

Office européen des brevets

(11) Publication number: **0 322 774**
**A2**

# (12) EUROPEAN PATENT APPLICATION

(21) Application number: 88121537.0

(22) Date of filing: 22.12.88

(51) Int. Cl.⁴: **B29C 67/14** , **B29C 47/02** , **B29C 43/24**

(30) Priority: 24.12.87 IT 2322187

(43) Date of publication of application:
05.07.89 Bulletin 89/27

(84) Designated Contracting States:
**AT BE CH DE ES FR GB LI NL SE**

(71) Applicant: **AUSIMONT S.r.l.**
**31, Foro Buonaparte**
**I-20121 Milano(IT)**

(72) Inventor: **Peroni, Giuseppe, Dr.**
**26, via G. Marconi**
**I-25064 Gussago Brescia(IT)**
Inventor: **Sgobino, Gianmaria**
**326, via Ravenna**
**I-44100 Ferrara(IT)**
Inventor: **Serra, Vincenzo**
**56, via Compagnoni**
**I-44100 Ferrara(IT)**
Inventor: **Moro, Alessandro, Dr.**
**Via Don P. Mazzolari**
**I-45030 Occhiobello Rovigo(IT)**

(74) Representative: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-8000 München 40(DE)**

(54) **Process for the continuous preparation of reinforced thermoplastic sheets and apparatus for carrying out said process.**

(57) Process for the continuous preparation of reinforced thermoplastic sheets, which comprises:

a) feeding to a multiple extrusion head a fiber-glass mat and a thermoplastic polymer in the fluid state;

b) coupling by co-extrusion at least one layer of thermoplastic polymer to at least one surface of the mat;

c) forming and cooling the coupled material thus obtained in a calendering section.

## PROCESS FOR THE CONTINUOUS PREPARATION OF REINFORCED THERMOPLASTIC SHEETS AND APPARATUS FOR CARRYING OUT SAID PROCESS

The present invention relates to a process for the continuous preparation of reinforced thermoplastic sheets.

More particularly, the present invention relates to a process for the continuous preparation of reinforced thermoplastic sheets, and to an apparatus suitable for carrying out said process.

The preparation of fiberglass-reinforced sheets, capable of being subsequently thermoformed by heating and compression into finished articles of various shapes, has already been described in the pertinent technical literature.

Typical methods and processes for obtaining such sheets are disclosed, e.g. in US-A-3,644,909; 3,713,962; 3,850,723 and in DE-A-2,948,235 and 2,312,816.

The fiberglass used in the above mentioned processes, generally pre-treated with sizing agents, is always employed as an either continuous or discontinuous mat, which sometimes may be needled.

According to the above methods, a thermoplastic polymer is introduced, in a molten state, between two mat layers, and the whole structure is then pressed on a flat, continuous or discontinuous, press.

Then feeding is interrupted, and the material is pressed between the suitable cooled platens of a press, so that the thermoplastic polymer may solidify to form a finished sheet. The pressure applied by the platens of the flat press is such as to ensure a penetration of the molten polymer into the mat.

According to a continuous production method, disclosed in DE-A-2,948,235, two layers of fiberglass fibers, obtained by needling of the fibers, obtained by needling of the fibers, are fed to a continuous press by means of conveyor belts.

Into the interior space between both mat layers, a thermoplastic polymeric material is extruded, with the top and bottom surfaces of the mat being preferably coated with a film of the same extruded polymer. The entire structure of film, molten polymer and mat is fed to a continuous press, wherein, in the first section, the material is subjected to a pressure of from 0.1 to 20 bar, so that air is squeezed off and the polymer distributes between the fiberglass fibers.

The material is then fed to the second section of the press, operating at the same pressure as the first section, but at a lower temperature, such as to cause the polymer to solidify into sheets.

Hence, such a type of process involves the use of needled mats, with a consequent considerable increase in the overall costs and the arising of environmental problems, due to the breaking of a portion of fiberglass fibers in the needling treatment.

Thus, one of the objects of the present invention is to provide a process for the continuous preparation of sheets of fiberglass-reinforced thermoplastic polymers which avoids the above mentioned problems, having considerable economic, environmental and technical advantages in that it makes it possible to obtain, with the production rate being the same as in the above processes, sheets which show a better distribution of the fiberglass fibers and are more homogeneous, due to an extreme reduction of the amount of entrained air, demonstrated by their density (about 98% of theorical). A further object of the present invention is to provide an apparatus for carrying out the above process.

The process according to the present invention comprises the successive steps of:

a) feeding to a multiple extrusion head a fiberglass mat and at least one thermoplastic polymer;

b) coupling by co-extrusion at least one layer of thermoplastic polymer to at least one surface of the mat; and

c) forming and cooling the coupled material thus obtained in a calendering section.

The strands used for preparing the mat employed in the process of the present invention are composed of a plurality of mono-filament (individual) glass fibers, and preferably have a count ranging from 10 to 26 tex. The diameter of each individual filament is preferably, but not necessarily, within the range of from 8 to 20 μm, even more preferred about 11.5 μm.

The choice of the glass filament should not be regarded as limitative, in that filaments made from other materials, having properties similar to glass, can be used as well. Examples of other employable fibers are mineral fibers, Kevlar fibers, carbon fibers, etc.

Any thermoplastic polymer can be used in order to prepare the composite sheets obtained by means of the process according to the present invention. For instance, olefinic polymers, such as low-, medium- and high-density polythene, polypropylene, ethylene/propylene copolymers, poly(butene-1), poly(4-methyl-1-pentene), polystyrene, impact-resistant polystyrene, polystyrene modified with such polar polymers as acrylonitrile, ABS resins, poly(vinyl chloride), polyamides, acrylic and methacrylic resins, polymethacrylates, polycarbonates, poly (phenyl ethers), polyesters, such as poly(ethylene terephthalate), poly(butylene terephthalate), etc., can be employed.

The polymer may also contain additives, such as antistatic agents, dyes, nucleating additives, pigments, stabilizers, flame-retardants, mineral or organic fillers, added for the purpose of improving the mechanical or aesthetic properties of the finished sheet, or can be composed of a polymer alloy.

The polymer is used in an amount of from 5 to 70% by weight, based on the total weight of the composite material, and preferably in an amount of from 10 to 60%.

The coupling operation, which is preferably conducted downstream of an extrusion head provided with at least two openings, is carried out with the polymer being in the fluid state, so that a homogeneous compenetration inside the interior of the mat can take place during the calendering step.

For the intended purpose, the mat can be preheated at a temperature lower than the melting temperature of the thermoplastic material, so as to avoid a possible freezing of the polymer.

The material exiting the extrusion head is fed to the calendering section, wherein the impregnation of the mat with the polymer, followed by cooling, takes place, so that the continuous sheet is solidified, in order to subsequently be cut and stored.

According to an alternative route, both operations of forming and cooling can be combined on one single calender having three or more rolls, wherein the forming and cooling takes place progressively and continuously.

The apparatus for the continuous preparation of the reinforced thermoplastic sheets comprises:

A) means suited for feeding a fiberglass mat;

B) a multiple extrusion head, capable of receiving a fiberglass mat and at least one thermoplastic material in the molten state, said extrusion head being fed by an extruder;

C) calendering rolls provided at the outlet of the extruder head;

D) cooling rolls; and

E) drive rolls, for conveying the composite sheet.

Any suitable means capable of feeding the fiber mat can be used in the apparatus according to the present invention, although unwinding rolls are the preferred means.

The extruder is of a type commonly used in the fabrication of plastic materials, whilst the multiple extrusion head is equipped with at least two openings, in order to promote the coupling of at least one thermoplastic polymer to at least one mat surface.

However, three-opening extrusion heads, for coupling the thermoplastic polymer to both mat surfaces, are preferred.

The outer surfaces of the calendering rolls are heated to a temperature lower than the melting temperature of the thermoplastic resin, in order to promote the homogeneous diffusion of the polymer throughout the interior of the mat, whilst the cooling rolls have their outer surface thermoregulated with a cooling medium.

According to a preferred embodiment of the apparatus according to the present invention, the calendering rolls and the colling rolls are comprised in one single calender equipped with at least three rolls; generally also four-roll calenders may be used.

The structural and functional characteristics of the apparatus for the continuous preparation of composite thermoplastic sheets according to the present invention may be better understood from the following detailed disclosure with reference to the Figures which show preferred embodiments which are given for the purpose of exemplifying the invention without limiting it, wherein:

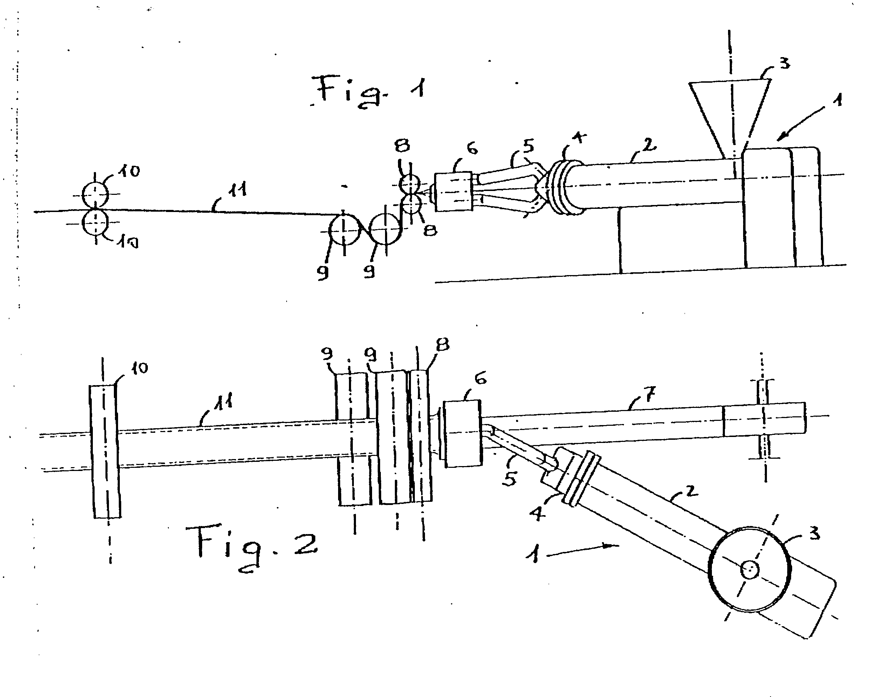

Figure 1 shows a side view of the apparatus according to the present invention, with a 4-roll calendering unit;

Figure 2 shows a top view of the same apparatus;

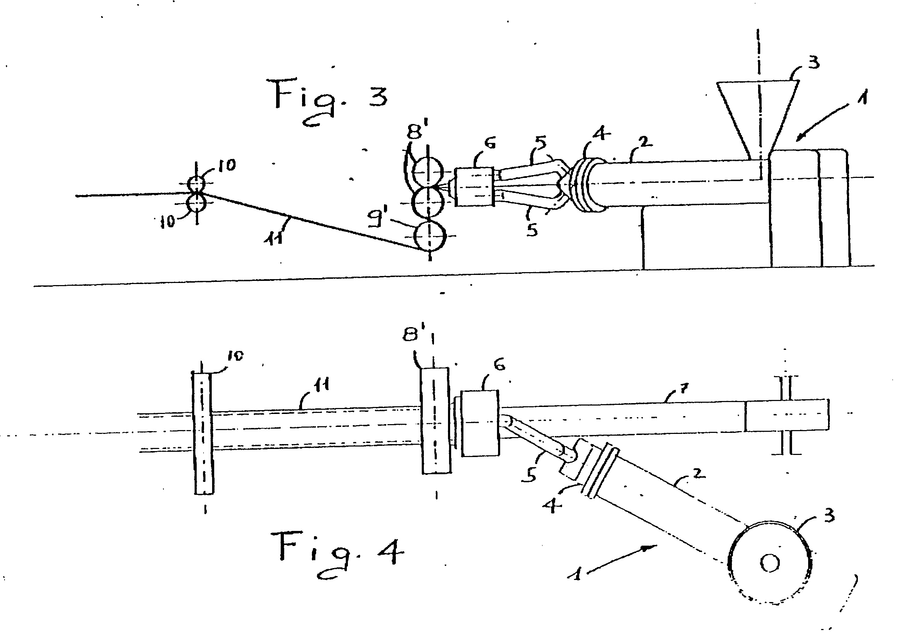

Figure 3 shows a side view of the apparatus according to the present invention, equipped with a 3-roll calendering unit;

Figure 4 shows a top view of the same apparatus;

Figure 5 shows a side sectional view of the extrusion head employable in the apparatus according to the present invention;

Figure 6 shows a rear view thereof; and

Figure 7 shows a front view of the same extrusion head.

With reference to the Figures, the apparatus according to the present invention comprises an extruder (1) provided with a central body (2) inside which the extrusion screw is located; a feeding hopper (3), by means of which the thermoplastic polymer is charged; a collecting head (4) for collecting the molten polymer; feed ducts (5) for feeding the molten polymer; and also comprising a three-opening extrusion head (6) separated from the extruder, but connected to it by means of the feed ducts (5) in such a way that the fiberglass mat (7) can be fed simultaneously to the thermoplastic polymer.

The apparatus according to the present invention furthermore comprises a four-roll calender, wherein two rolls (8) are compacting rolls, and two rolls (9) are cooling rolls, and a drive section equipped with two rolls (10), in order to convey the composite sheet to the cutting sections, not shown in the figures.

According to another embodiment, the calender can be a three-roll calender, wherein two rolls (8') are compacting rolls, and one roll (9') is a cooling roll.

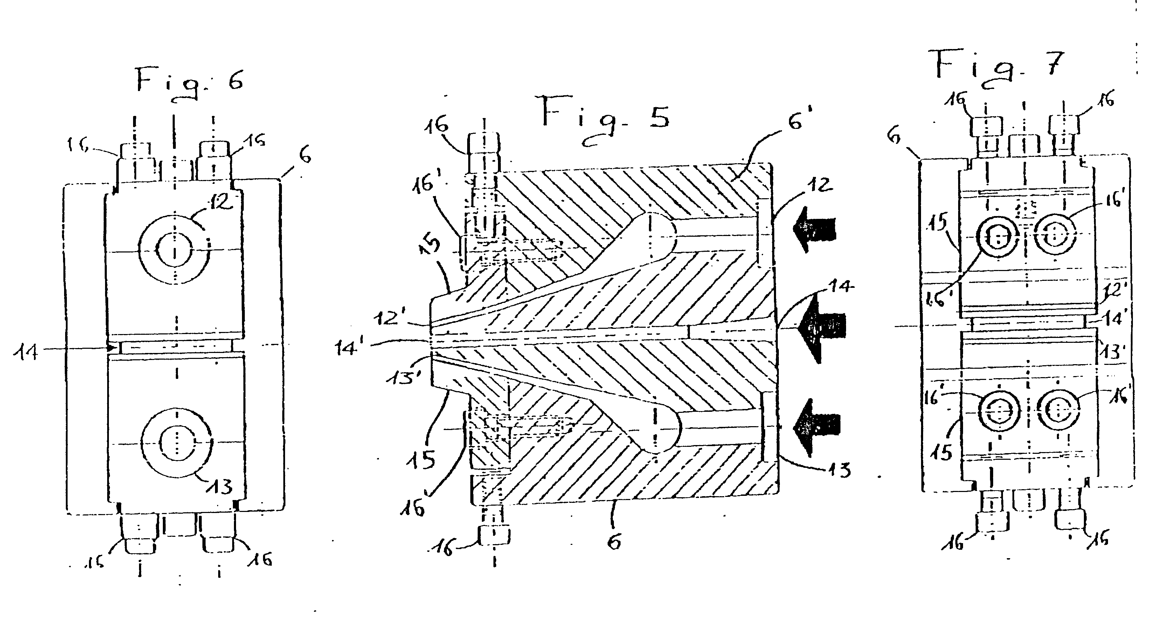

The extrusion head (6), shown in Figures 5, 6 and 7, comprises a body (6') provided with inlets (12), (13) and (14), respectively for feeding the thermoplastic polymer, (12) and (13), and the fiber mat (14), and with corresponding outlets openings (12'), (13') and (14').

The surface-area of these latter can be adjusted by means of the blocks (15) sliding along the front side of the extrusion head by means of a screw system (16) and (16').

The thermoplastic polymer charged to the extruder (1) by means of the hopper (3), after having been heated and melted in the central body (2) is collected inside the body (4) and is then fed, through the feed ducts (5) to the extrusion head (6) through the inlets (12) and (13); to the same head, through the inlet (14), the fiberglass mat (7) is fed in such way that the thermoplastic polymer, leaving through the openings (12') and (13'), can be coupled therewith on both of the surfaces of the mat exiting the extrusion head through the opening (14').

The coupling operation takes place downstream the extrusion head, between the calendering rolls (8) and (9) or (8') and (9').

In the above embodiments of the present invention, several changes, modifications and variations can be made as regards the various parts which constitute the device for the continuous preparation of the thermoformable composite sheets without leaving the spirit and scope of the present invention.

## Claims

1. Process for the continuous preparation of reinforced thermoplastic sheets, which comprises:

   a) feeding to a multiple extrusion head a fiberglass mat and at least one thermoplastic polymer;

   b) coupling by co-extrusion at least one layer of thermoplastic polymer to at least one surface of the mat;

   c) forming and cooling the coupled material thus obtained in a calendering section.

2. Process according to claim 1, wherein the mat is preheated at a temperature lower than the melting temperature of the thermoplastic polymer.

3. Process according to anyone of claims 1 and 2, wherein the polymer is used in an amount of from 5 to 70% by weight, based on the total weight of the composite sheet.

4. Apparatus for the continuous preparation of reinforced thermoplastic sheets comprising:

   A) means suited for feeding a fiberglass mat;

   B) a multiple extrusion head, capable of receiving the fiberglass mat and at least on thermoplastic material in the molten state, said extrustion head being fed by an extruder;

   C) calendering rolls provided at the outlet of the extruder head;

   D) cooling rolls; and

   E) drive rolls for conveying the composite sheet.

5. Apparatus according to claim 4, wherein the multiple extrusion head is equipped with three openings.

6. Apparatus according to anyone of claims 4 and 5, wherein the calendering rolls and the cooling rolls are comprised in one single calender equipped with at least three rolls.

7. Apparatus according to claim 6, wherein the calender is a four-roll calender.

Fig. 1

Fig. 2

EP 0 322 774 A2

Fig. 3

Fig. 4

Fig. 7

Fig. 5

Fig. 6